# EUROPÄISCHE PATENTSCHRIFT

(11) **EP 1 862 050 B1**
(45) Veröffentlichungstag und Bekanntmachung des Hinweises auf die Patenterteilung: **17.06.2009**
(21) Anmeldenummer: 07007706.0
(22) Anmeldetag: 16.04.2007
(51) Int. Cl.: A01B 69/00

(54) **Verfahren und Vorrichtung zur Steuerung des Anspannens einer Landmaschine an einen Schlepper**
Method and device for operating the hooking device of an agricultural machine to a tractor
Procédé et dispositif destinés à la commande de l'attache d'une machine agricole sur une remorque

(30) Priorität: 01.06.2006 DE 102006025698
(43) Veröffentlichungstag der Anmeldung: 05.12.2007
(73) Patentinhaber: Alois Pöttinger Maschinenfabrik Ges. m.b.H., 4710 Grieskirchen (AT)
(72) Erfinder: Pöttinger, Klaus, 4710 Grieskirchen (AT)
(74) Vertreter: Thoma, Michael

(56) Entgegenhaltungen:
- EP-A- 1 238 577
- DE-A1- 4 413 694
- DE-A1- 10 224 939
- DE-A1- 10 328 395
- DE-A1-7102004 009 18

## Beschreibung

Die vorliegende Erfindung betrifft eine Vorrichtung zur Steuerung des Anspannens einer Landmaschine, wie Pflug, Zetter, Ladewagen und dergleichen, an ein Arbeitsfahrzeug, insbesondere Schlepper, mit einer Erfassungseinrichtung zur Erfassung der Lage einer landmaschinenseitigen Anspannschnittstelle relativ zu einer fahrzeugseitigen Anspannschnittstelle, sowie einer Steuereinrichtung zur Bestimmung von Bewegungssteuersignalen in Abhängigkeit der erfassten relativen Lage, wobei die Steuereinrichtung eine Lenksignaleinrichtung zur Bereitstellung eines Lenksignals für die Lenkung der Räder des Arbeitsfahrzeugs bei dessen Annäherung an die Landmaschine in Abhängigkeit der erfassten relativen Lage aufweist. Weiterhin betrifft die vorliegende Erfindung ein Verfahren zur Steuerung des Anspannens einer Landmaschine, wie Pflug, Zetter, Ladewagen und dergleichen, an ein Arbeitsfahrzeug, insbesondere Schlepper, bei dem bei der Annäherung des Arbeitsfahrzeugs an die Landmaschine die relative Lage einer landmaschinenseitigen Anspannschnittstelle relativ zu einer fahrzeugseitigen Anspannschnittstelle erfasst und in Abhängigkeit der jeweils erfassten relativen Lage Bewegungssteuersignale zur Steuerung einer Bewegung des Arbeitsfahrzeugs bestimmt und in Abhängigkeit der jeweils erfassten relativen Lage Lenksignale für den Lenkradeinschlag zur Lenkung der Räder des Arbeitsfahrzeugs bei dessen Annäherung an die Landmaschine bestimmt und bereitgestellt werden.

Zum Anspannen eines landwirtschaftlichen Anbaugerätes, wie beispielsweise eines Pflugs, einer Heuwerbungsmaschine, eines Mähwerks oder auch einer Sämaschine, an ein landwirtschaftliches Arbeitsfahrzeug, wie Schlepper, Traktor, aber auch an eine Erntemaschine, sind verschiedene Anspannsysteme bekannt geworden, die ein Anspannen vom Führerstand aus ermöglichen, ohne dass der Maschinenführer absteigen und händisch an der Kuppelvorrichtung eingreifen müsste. Beispielsweise zeigt die EP 1 500 321 A1 ein solches Anspannsystem, bei dem die fahrzeugseitige Anspannschnittstelle ein im wesentlichen dreieckförmiges Rahmenteil aufweist, das in ein ebenfalls dreieckförmiges Rahmenteil der landmaschinenseitigen Anspannschnittstelle einfährt und beim Anheben die im Kopfteil der Rahmenteile vorgesehenen Kupplungselemente zusammenfährt. Eine Zapfwellenverbindung wird dabei über Schubklauen bewerkstelligt, die den maschinenseitigen Zapfwellenanschluss translatorisch auf den geräteseitigen Wellenstumpf schieben. Auch wenn dieses Anspannsystem das Anspannen beträchtlich erleichtert, ist doch ein präzises Anfahren der jeweiligen Landmaschine erforderlich, damit die zueinander komplementären Rahmenteile passgenau ineinander gefahren werden können. Dies ist bisweilen schwierig, da das Blickfeld auf die Rahmenteile des Anspannsystems verstellt sein kann. Ein ähnliches Anspannsystem beschreibt die US 3,432,184, bei der ebenfalls dreieckförmige Anbauplatten aufeinander zu fahren sind. Die schlepperseitige Anbauplatte kann hierbei über mehrere hydraulische und elektrische Aktoren relativ zum Schlepper bewegt werden, um sozusagen eine Feinjustierung vornehmen zu können. Dies ist jedoch ebenfalls nicht ganz einfach, da der Maschinenführer von der Fahrerkabine aus die Anspannschnittstelle schlecht einsehen und die Abstände zwischen den aufeinander zu fahrenden Platten schlecht abschätzen kann.

Um die Problematik der schlechten Einsehbarkeit der Anbauschnittstellen abzumildern, schlägt die EP 1 238 577 A1 eine Bilderfassung der geräteseitigen Kupplungspunkte und der fahrzeugseitigen Kupplungspunkte vor, anhand derer die relative Lage der maschinenseitigen Kupplungspunkte und der fahrzeugseitigen Kupplungspunkte zueinander bestimmt wird. Eine Steuereinrichtung berechnet aus dieser relativen Lage eine Bewegungsbahn für die fahrzeugseitigen Kupplungspunkte für den Kupplungsvorgang, anhand derer dann mittels Aktoren die räumliche Lage der fahrzeugseitigen Kupplungspunkte relativ zum Arbeitsfahrzeug eingestellt werden, um den Kupplungsvorgang automatisch auszuführen, d.h. das Fahrzeug wird in eine Position ausreichend nahe bei der anzukuppelnden Landmaschine gebracht und angehalten, so dass der eigentliche Ankuppelvorgang dann über die Aktoren bewerkstelligt werden kann, mittels derer die fahrzeugseitigen Kupplungspunkte gegenüber dem Fahrzeug soweit verstellt werden können, dass sie mit den maschinenseitigen Kupplungspunkten in Eingriff gebracht werden können. Dies erfordert jedoch eine umfassende räumliche Beweglichkeit der fahrzeugseitigen Anspannschnittstelle gegenüber dem Fahrzeug und eine dementsprechend komplexe Aktorik, um die Kupplungspunkte der fahrzeugseitigen Anspannschnittstelle entsprechend bewegen zu können. Zudem erfordert auch bei solchen räumlich bewegbaren Anspannsystemen das Anfahren der Landmaschine immer noch viel Fingerspitzengefühl, um die beiden Anspannschnittstellen ausreichend präzise und ausreichend nahe aufeinander zu bringen. Gerade bei weniger komplex beweglichen Anspannschnittstellen bleibt das Anfahren der Kupplungsposition immer noch sehr schwierig, wenn das Blickfeld auf die Anspannschnittstellen vom Führerstand aus verstellt ist. Zudem erfordert die individuelle Steuerung der einzelnen Aktoren für die fahrzeugseitigen Kupplungspunkte anhand des Bildvergleichs der Kupplungspunkte selbst hohe Bildauflösungen und hohe Rechnerkapazitäten, da hierbei komplexe Algorithmen abzuarbeiten sind.

Aus der DE 44 13 694 A1 ist eine Vorrichtung zur Steuerung des Anspannens der eingangs genannten Art bekannt, wobei zwischen dem Kupplungsmaul des Arbeitsfahrzeugs und dem Kupplungspunkt der anzuhängenden Landmaschine eine Peilschnur gespannt wird, um einen Peilwinkel für die Bestimmung des Lenkwinkels zu erfassen. Ferner beschreibt die EP 12 38 577 den Einsatz zweier Kameras auf einem Schlepperkabinendach, mittels derer die räumlichen Koordinaten eines landmaschinenseitigen Koppeldreiecks errechnet werden.

Der vorliegenden Erfindung liegt demgegenüber die Aufgabe zugrunde, eine verbesserte Vorrichtung sowie ein verbessertes Verfahren der eingangs genannten Art zu schaffen, die Nachteile des Standes der Technik vermeiden und letzteren in vorteilhafter Weise weiterbilden. Insbesondere soll das Anspannen auch für weniger erfahrene Maschinenführer weiter vereinfacht werden.

Erfindungsgemäß wird diese Aufgabe durch eine Vorrichtung gemäß Anspruch 1 sowie ein Verfahren gemäß Anspruch 12 gelöst. Bevorzugte Ausgestaltungen der Erfindung sind Gegenstand der abhängigen Ansprüche.

Die vorliegende Erfindung setzt dabei bereits vor Erreichen der Fahrzeugposition ein, in der der Kupplungsvorgang durch Bewegen der Anspannschnittstelle erreicht werden kann. Es wird bereits eine Fahrhilfe bei dem schwierigen Anfahren der Kupplungsposition gegeben. Hierzu besitzt die Steuereinrichtung eine Lenksignaleinrichtung, die in Abhängigkeit der erfassten relativen Lage von Landmaschine und Arbeitsfahrzeug zueinander ein Lenksignal für die Lenkung der Räder des Arbeitsfahrzeugs bei dessen Annäherung an die Landmaschine bereitstellt. Die von der Erfassungseinrichtung erfasste relative Lage der Landmaschine relativ zum Fahrzeug wird also für eine Anfahrsteuerung zum Erreichen der Kupplungsposition des Fahrzeugs genutzt und kann darüber hinaus dann vorteilhafterweise auch für eine Bewegungssteuerung der Anspannschnittstelle relativ zum Arbeitsfahrzeug genutzt werden. Die Bereitstellung eines Lenksignals für den Lenkradeinschlag am Arbeitsfahrzeug erleichtert jedoch bereits das Erreichen der Kupplungsposition des Arbeitsfahrzeugs, in der dann der eigentliche Kupplungsvorgang erfolgen kann, beträchtlich. Dabei erschöpft sich die Steuerung des Anspannprozesses nicht nur auf den Lenkvorgang während der Annäherung des Arbeitsfahrzeugs an die Landmaschine. Erfindungsgemäß weist die Steuereinrichtung eine Geräteidentifikationseinrichtung zur automatischen ldentifikation einer anzuspannenden Landmaschine und Bereitstellung eines entsprechenden Geräteidentifikationssignals auf. Nähert sich das Arbeitsfahrzeug beim Anspannen der entsprechenden Landmaschine an, wertet die Geräteidentifikationseinrichtung durch die Erfassungseinrichtung erfasste charakteristische Merkmale der jeweiligen Landmaschine aus und bestimmt hierdurch deren Identität.

Grundsätzlich kann die relative Lage der Landmaschine zum Arbeitsfahrzeug mittels verschieden ausgebildeter Sensorikelemente erfasst und bestimmt werden. Insbesondere kann die Erfassungsvorrichtung hierzu eine Bilderfassungseinheit aufweisen, mit der eine Bilderfassung der Landmaschine beim Anspannvorgang vorgenommen werden kann. Die relative Lage der Landmaschine zum Arbeitsfahrzeug wird dabei vorteilhafterweise insbesondere durch eine Bildauswerteinrichtung bestimmt, die einen Bildvergleich zwischen zumindest einem gespeicherten Bild der Landmaschine und/oder des Arbeitsfahrzeugs mit einem entsprechenden, beim jeweiligen Anspannvorgang erfassten aktuellen Bild durchführt. Die gespeicherten Bilder können vorab gespeichert sein. Insbesondere sind in einem entsprechenden Bildspeicher Bilder der Landmaschine und/oder des Arbeitsfahrzeugs gespeichert, die bei einem Abspannen der Landmaschine zu einem früheren Zeitpunkt erfasst wurden. Die Bilderfassungseinheit kann dabei zumindest eine Kamera aufweisen, die vorzugsweise auf dem Schlepper angeordnet ist, alternativ oder zusätzlich kann jedoch auch zumindest eine Kamera auf der Landmaschine vorgesehen sein, um das sich annähernde Arbeitsfahrzeug zu erfassen. Bevorzugt ist jedoch die Anordnung der Bilderfassungseinheit an dem Arbeitsfahrzeug, da hierdurch nicht jedes Anbaugerät mit einer Bilderfassungseinheit ausgestattet werden muss.

Vorzugsweise erfasst die Bilderfassungseinheit dabei an der Landmaschine und/oder dem Arbeitsfahrzeug angebrachte Kennzeichnungssymbole, deren Lage relativ zu den Kupplungspunkten bekannt ist und die damit leicht erfassbare Referenzpunkte definieren. Hierdurch kann im Vergleich zu einer unmittelbaren Entfernung der Kupplungspunkte, die nichtsdestotrotz möglich ist, die Bildauswertung vereinfacht und die zu verarbeitende Datenmenge reduziert werden.

Das aus dem Bildvergleich gewonnene Lenksignal kann in verschiedener Art und Weise bereitgestellt bzw. eingesetzt werden. Nach einer bevorzugten Ausführung der Erfindung kann das Lenksignal in einer Lenkhilfevorrichtung verwertet werden, die dem Maschinenführer die erforderliche Richtung und/oder den erforderlichen Betrag des Lenkradeinschlags angibt, die Betätigung des Lenkrades jedoch dem Maschinenführer überlässt. Die Steuereinrichtung kann in Weiterbildung der Erfindung hierbei eine visuelle Anzeigevorrichtung aufweisen, die den vorzunehmenden Lenkradeinschlag beispielsweise in Form eines Pfeils anzeigt, dessen Orientierung je nach Richtung des vorzunehmenden Lenkeinschlages umspringt. Gegebenenfalls kann die Länge und/oder die Farbe des angezeigten Pfeils in Abhängigkeit der Stärke des Lenkradeinschlags variiert werden. Alternativ oder zusätzlich kann auch eine akustische Anzeigevorrichtung vorgesehen sein, die durch akustische Signale, beispielsweise in Form von gesprochenen Anweisungen, den vorzunehmenden Lenkradeinschlag in Form des bereitgestellten Lenksignals vorgibt.

Insbesondere kann in Weiterbildung der Erfindung das bereitgestellte Lenksignal auch für eine halb- oder vollautomatische Lenkung des Arbeitsfahrzeugs beim Anfahren der Landmaschine verwendet werden. Nach einer vorteilhaften Ausbildung der Erfindung kann die Steuereinrichtung eine Lenkeinrichtung aufweisen, die den Lenkradeinschlag des Fahrzeugs bei der Annäherung an die Landmaschine in Abhängigkeit der erfassten relativen Lage steuert. Dies kann halbautomatisch dahingehend erfolgen, dass beispielsweise durch Drücken eines Startknopfes für ein automatisches Lenkprogramm die Lenkeinrichtung den Lenkeinschlag beim weiteren Annähern an die Landmaschine übernimmt, wobei ggf. vorgesehen sein kann, dass der Maschinenführer als übergeordnete Steuerungsinstanz durch Betätigung des Lenkrades den Lenkradeinschlag abweichend bestimmen kann, beispielsweise um in Gefahrensituationen auszuweichen. Alternativ kann auch eine vollautomatische Steuerung des Lenkradeinschlags bei der Annäherung vorgesehen sein, insbesondere dahingehend, dass bei Erreichen eines vorbestimmten Abstandes zur Landmaschine bei der Annäherung die Lenkeinrichtung den Lenkeinschlag übernimmt, wenn die Erfassungseinrichtung, insbesondere die Bilderfassungseinrichtung und die damit verbundene Steuereinrichtung, das anzukuppelnde Gerät erkennt und/oder die relative Lage ausreichend präzise bestimmen kann, um ein Lenksignal bereitstellen zu können.

In Weiterbildung der Erfindung ist vorgesehen, dass sich die Steuereinrichtung einen Soll-Fahrpfad des Arbeitsfahrzeugs relativ zu der Landmaschine beim Anspannen und/oder beim Abspannen merkt und die Lenksignaleinrichtung das Lenksignal in Abhängigkeit dieses Soll-Fahrpfades bestimmt, insbesondere anhand eines Abgleichs des Ist-Fahrpfads mit dem gespeicherten Soll-Fahrpfad. Mittels einer entsprechenden Fahrpfad-Bestimmungseinrichtung kann aus der bei einem erfolgreichen An- oder Abspannen sukzessive erfassten relativen Lage ein Fahrpfad für das Arbeitsfahrzeug relativ zur Landmaschine bestimmt werden, der dann als Soll-Fahrpfad für ein zukünftiges An- oder Abspannen verwendet wird. Der gespeicherte Fahrpfad kann dabei entsprechende Bilddaten, die von der Bilderfassungseinrichtung bereitgestellt werden, mit einzelnen Punkten der gespeicherten Trajektorie verknüpfen, und/oder entsprechende Lenksignale bzw. Lenkradeinschläge für die verschiedenen Punkte des Fahrpfads abspeichern, so dass das Lenksignal anhand des gespeicherten Fahrpfads und der damit verknüpften Daten bestimmt werden kann. Um sicherzustellen, dass sich das Fahrzeug entlang des gewünschten Soll-Fahrpfads der Landmaschine annähert bzw. beim Abspannen von dieser entfernt, kann insbesondere das von der Bilderfassungseinheit aktuell erfasste Bild mit einer abgespeicherten, den Soll-Fahrpfad wiedergebenden Bildfolge verglichen werden, so dass aus Abweichungen das Lenksignal für den Lenkradeinschlag bestimmt wird.

Insbesondere kann an der jeweiligen Landmaschine ein individuelles Kennzeichnungssymbol, beispielsweise in Form eines Strichcodes, angebracht sein, das von der dann einen Strichcodeleser aufweisenden Erfassungseinrichtung erfasst wird, so dass die Geräteidentifikationseinrichtung anhand des erfassten Symbols die anzuspannende Landmaschine identifizieren und ein entsprechendes Geräteidentifikationssignal bereitstellen kann. Alternativ oder zusätzlich zu einem einzelnen individuellen Kennzeichnungssymbol kann auch eine individuelle Anordnung von selbst nicht individuellen Kennzeichnungssymbolen an der Landmaschine angebracht sein, insbesondere können in charakteristischer Anordnung und/oder in charakteristischer Kombination Kennzeichnungssymbole in Form von mathematischen Grundformen wie Kreisen oder Dreiecken oder Quadraten angeordnet sein. Beispielsweise kann zur Kennzeichnung eines Zetters ein gelber Kreis über einem roten Rechteck angeordnet sein. Die Identifikationseinrichtung erfasst diese Symbolanordnung und bestimmt hieraus, dass es sich um einen entsprechenden Zetter handelt.

Das bereitgestellte Geräteidentifikationssignal kann in verschiedenster Weise genutzt werden. Beispielsweise kann es zu Auswertezwecken zusammen mit weiteren Feldbearbeitungsparametern an eine Auswerteeinrichtung, beispielsweise in Form eines zentralen Servers oder eines arbeitsfahrzeugspezifischen Jobrechners, übertragen werden, so dass einfach ausgewertet werden kann, zu welcher Zeit welches Feld mit welchem Anbaugerät bearbeitet wurde, was beispielsweise für Wartungsarbeiten und -zyklen, aber auch für Abrechnungen verwendet werden kann. Alternativ oder zusätzlich können in Abhängigkeit des bereitgestellten Geräteidentifikationssignals Betriebsparameter und/oder Steuerungsfunktionen des Arbeitsfahrzeugs eingestellt bzw. voreingestellt werden. Beispielsweise kann die Lage und/oder die Konfiguration der fahrzeugseitigen Anspannschnittstelle an das jeweils erkannte, anzuspannende Gerät angepasst werden. Alternativ oder zusätzlich können für den Betrieb des jeweiligen Gerätes benötigte Steuerungsfunktionen, wie beispielsweise Zapfwellengeschwindigkeit, Fahrgeschwindigkeit und dergleichen, vorausgewählt werden. Insbesondere kann auch die vorzugsweise abgespeicherte, für das Zusammenfahren der Anspannschnittstellen notwendige Bewegung der fahrzeugseitigen Anspannschnittstelle relativ zum Arbeitsfahrzeug bestimmt werden, so dass die Steuereinrichtung entsprechende Aktoren zur Bewegung der Anschlussschnittstelle am Fahrzeug bei Erreichen der Kopplungsposition des Fahrzeugs entsprechend ansteuern kann, um die fahrzeugseitige Anspannschnittstelle mit der maschinenseitigen Anspannschnittstelle in Eingriff zu bringen.

Alternativ oder zusätzlich kann das bereitgestellte Geräteidentifikationssignal auch beim Abspannen des jeweiligen Geräts dazu verwendet werden, sich die Abstellposition des jeweiligen Geräts zu merken. Vorteilhafterweise umfasst die Steuereinrichtung eine Positionsbestimmungseinrichtung, beispielsweise in Form eines aus dem Kraftfahrzeugbereich bekannten GPS. Wird eine jeweilige Landmaschine abgespannt, können die von der Positionsbestimmungseinrichtung bereitgestellten Positionsdaten zusammen mit den Geräteidentifikationsdaten in einem Abstellpositionsspeicher abgespeichert werden, so dass bei einem ggf. erst Wochen später erfolgenden erneuten Anspannen die zu dem jeweiligen Gerät gehörigen Positionsdaten leicht abfragbar und/oder bereitstellbar sind. Vorzugsweise kann die Steuereinrichtung dahingehend ausgebildet sein, dass beim Abfragen der entsprechenden Geräteidentifikation die Positionsbestimmungseinrichtung, insbesondere in Form eines GPS, entsprechende Routenanzeigesignale bereitstellt, die den Maschinenführer zu der Abstellposition leiten.

Die für die Steuereinrichtung zu speichernden, diversen Daten können an verschiedenen Stellen gespeichert werden. In Weiterbildung der Erfindung kann an dem Arbeitsfahrzeug ein entsprechender Datenspeicher vorgesehen sein. Alternativ oder zusätzlich können die diversen Daten auch auf einem zentralen Server hinterlegt werden, wobei in diesem Fall das Arbeitsfahrzeug vorteilhafterweise eine entsprechende Datenfernübertragungseinrichtung aufweist, um Daten auf diesem Server abzulegen und/oder von diesem abzufragen.

Die vorliegende Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht einer Landmaschine in Form eines Pflugs und eines Schleppers während eines Anspannprozesses, der mit Hilfe einer Bilderfassung gesteuert wird,

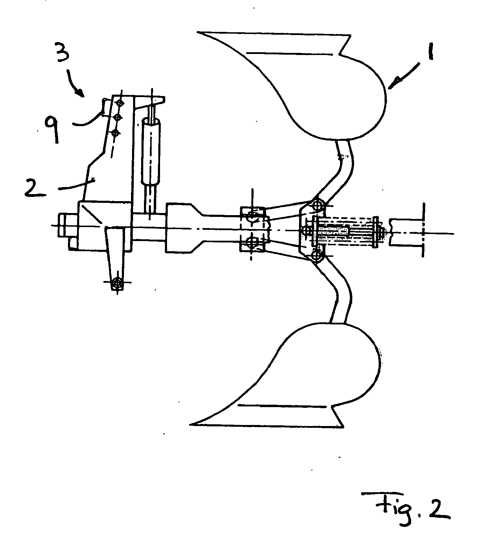

- Fig. 2:: eine schematische Seitenansicht des anzuspannenden Pfluges und der daran angebrachten Kennzeichnungssymbole zur Identifikation des Pfluges, und
- Fig. 3:: eine schematische Darstellung des Fahrpfads für die Annäherung des Schleppers an die Landmaschine beim Anspannprozess sowie die hierfür genutzten Kennzeichnungssymbole an der Landmaschine.

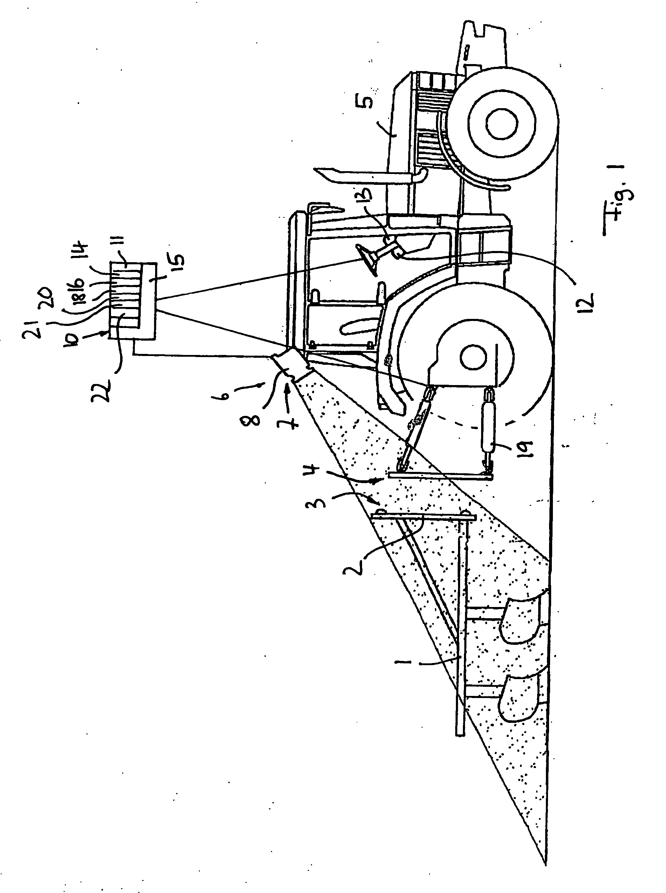

In Figur 1 ist als anzuspannende Landmaschine ein Pflug 1 dargestellt, der an einem Anbaubock 2 eine Anspannschnittstelle 3 besitzt, die mit einer dazu passenden Anspannschnittstelle 4 eines schematisch dargestellten Schleppers 5 kuppelbar ist, wobei die Anspannschnittstellen 3 und 4 geeignete, nicht näher dargestellte Kupplungselemente aufweisen, die miteinander in Eingriff gebracht werden können. Die Kupplungselemente können dabei einerseits eine formschlüssige und/oder kraftschlüssige mechanische Verbindung der beiden Anspannschnittstellen 3 und 4, aber auch eine Kraft- und/oder Energieübertragung in mechanischer, elektrischer, hydraulischer oder pneumatischer Form vorsehen. Beispielsweise können Hydraulikkupplungselemente, elektrische Kupplungselemente und Zapfwellenkupplungselemente vorgesehen sein, wobei letztere bei einem Pflug weniger relevant sind.

Insbesondere können die Anspannschnittstellen 3 und 4 grundsätzlich eine Ausbildung besitzen, wie sie in der veröffentlichten Schrift EP 1 500 321 A1 beschrieben ist. Bezüglich der Ausbildung der Anspannschnittstellen 3 und 4 wird insoweit auf diese Schrift verwiesen.

Wie Figur 1 zeigt, ist zur Steuerung des Anspannprozesses eine Erfassungseinrichtung 6 zur Erfassung der relativen Lage des Pfluges 1 zum Schlepper 5 vorgesehen, die vorteilhafterweise eine Bilderfassungseinheit 7 aufweist, mittels derer die Lage des Pfluges 1, insbesondere dessen Anspannschnittstelle 3, relativ zum Schlepper 5 bestimmt werden kann. In der gezeichneten Ausführungsform umfasst die Bilderfassungseinheit 7 eine an dem Schlepper 5 angeordnete Kamera 8, die in der gezeichneten Darstellung am Dach der Führerkabine angeordnet ist.

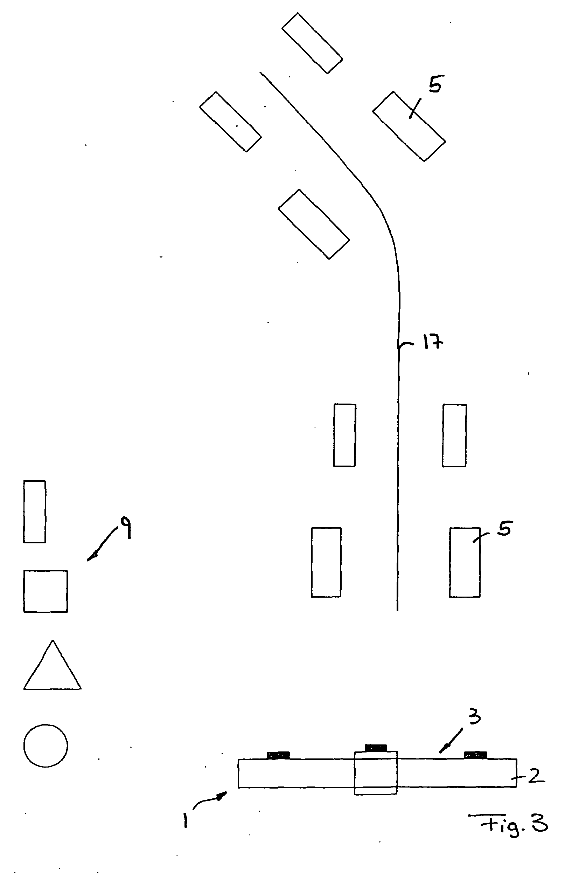

Vorzugsweise im Bereich der Anspannschnittstelle 3 sind an dem Pflug 1 individuelle Kennzeichnungssymbole 9 angebracht, die von der Bilderfassungseinheit 7 leicht erfassbar sind. Wie Figur 3 zeigt, können die Kennzeichnungssymbole 9 selbst individuell, vorzugsweise in Form geometrischer Grundformen, ausgebildet sein, und in einer charakteristischen Anordnung zueinander positioniert sein. In dem in Figur 3 gezeichneten Beispiel sind in einer Reihe übereinander ein Kreis, ein Dreieck, ein Quadrat und ein Rechteck angeordnet. Durch diese Kennzeichnungssymbolanordnung kann zum einen die jeweils anzuspannende Landmaschine identifiziert werden. Vorteilhafterweise kann auch die Position der Anspannschnittstelle 3 des Pfluges 1 anhand der erfassten Symbole bestimmt werden, wenn diese vorteilhafterweise in einer bestimmten Anordnung relativ zu den Kupplungspunkten der Anspannschnittstelle 3 angeordnet sind. Die Verwendung solcher Kennzeichnungssymbole erleichtert die Bildauswertung beträchtlich.

Die genannte Kamera 8 der Bilderfassungseinheit 7 erfasst die Kennzeichnungssymbole 9 und deren Lage relativ zu dem Schlepper 5. In einer übergeordneten Steuereinrichtung 10, mit der die Bilderfassungseinheit 7 verbunden ist, sind mit den jeweiligen Kennzeichnungssymbolen 9 bzw. deren Anordnung diverse Steuerungsdaten verknüpft. Insbesondere kann beispielsweise die Lage der Kupplungspunkte der Anspannschnittstelle 3 relativ zu den genannten Kennzeichnungssymbolen 9 abgespeichert sein. Es versteht sich, dass weitere Daten mit diesen Kennzeichnungssymbolen 9 gespeichert sind, wie sich aus der folgenden Beschreibung noch ergibt.

Zum Anspannen braucht ein Maschinenführer den Schlepper 5 lediglich so weit an den anzuspannenden Pflug 1 annähern, bis die Kamera 8 die Anordnung der Kennzeichnungssymbole 9 am Anbaubock 2 erfasst. Anhand des erfassten Bildes wird sodann von der Steuereinrichtung 10 die relative Lage des Pfluges 1 zum Schlepper 5 bestimmt, genauer gesagt die Lage der Anspannschnittstelle 3 relativ zur Anspannschnittstelle 4. Dies erfolgt vorteilhafterweise anhand eines Vergleichs des jeweils erfassten Bildes sowie abgespeicherter Bilder, die beispielsweise beim letzten Abspann des Pfluges 1 erfasst und abgespeichert wurden.

Anhand der hierdurch bestimmten relativen Lage ermittelt eine in der Steuereinrichtung 10 vorgesehene Lenksignaleinrichtung 11 ein Lenksignal für den Schlepper 5, das den Schlepper 5 präzise auf den Pflug 1 zuführt, bis die Anspannschnittstellen 3 und 4 in Eingriff gebracht werden können. In Abhängigkeit des bereitgestellten Lenksignals kann auf einer im Cockpit des Schleppers 5 vorgesehenen Anzeigevorrichtung 12 ein vorzunehmender Lenkradeinschlag beispielsweise durch einen Pfeil angezeigt werden. Alternativ oder zusätzlich kann das Lenksignal von einer am Schlepper vorgesehenen Lenkeinrichtung 13 unmittelbar in einen Lenkradeinschlag umgesetzt werden, so dass der Maschinenführer lediglich noch die Annäherung selbst betragsmäßig beispielsweise durch Gasgeben steuern muss. Vorteilhafterweise jedoch kann anhand der erfassten relativen Lage von einer in der Steuereinrichtung 10 vorgesehenen Abstandsbestimmungseinrichtung 14 ein Abstandssignal bereitgestellt werden, das wiederum auf der Anzeigevorrichtung 12 angezeigt, altemativ oder zusätzlich jedoch auch für die Steuerung der Fahrgeschwindigkeit verwendet werden kann. An dem Schlepper 5 kann hierzu eine entsprechende Fahrgeschwindigkeitssteuereinrichtung vorgesehen sein, die in Abhängigkeit des Abstandssignals arbeitet.

Vorteilhafterweise ist dabei in der Steuereinrichtung 10 bzw. einem damit verbundenen Speicher 15 ein Fahrpfad 16 abgespeichert, wie ihn Figur 3 zeigt. Die Lenkeinrichtung 13 und/oder die Fahrgeschwindigkeitssteuereinrichtung 16 steuern den Schlepper 5 dabei derart, dass er sich mit einer gewünschten Geschwindigkeit entlang des gespeicherten Fahrpfades 17 dem Pflug 1 annähert. Über die Bilderfassungseinheit 7 und einem entsprechenden Abgleich mit dem gespeicherten Fahrpfad kann dabei sichergestellt werden, dass sich der Schlepper 5 auf der gewünschten Bahn auf den Pflug 1 zu bewegt.

Eine in der Steuereinrichtung 10 vorgesehene Geräteidentifikationseinrichtung 18 stellt in Abhängigkeit der erfassten Kennzeichnungssymbole 9 ein Geräteidentifikationssignal bereit, anhand dessen die Steuereinrichtung 10 sodann die Konfiguration der Anspannschnittstelle 4 steuert. Die Anspannschnittstelle 4 ist dabei vorteilhafterweise über mehrere Aktoren 19 in ihrer Lage relativ zu dem Schlepper 5 veränderbar. Figur 1 deutet eine Mehrpunktanlenkung der Anspannschnittstelle 4 an dem Schlepper 5 mit mehreren Unterlenkern und zumindest einem Oberlenker an, die als Stellzylinder ausgebildet sein können, um die Lage der Anspannschnittstelle 4 entsprechend zu verändern. Die Aktoren 19 zur Veränderung der Konfiguration und/oder Lage der Anspannschnittstelle 4 werden von der Steuereinrichtung 10 in Abhängigkeit gespeicherter Daten eingestellt, um sie an das jeweils anzuspannende Gerät anzupassen. Eine automatische Anpassung des Schleppers 5 bei Näherung an die anzuspannende Landmaschine erleichtert den Ankoppelprozess beträchtlich.

Die Steuereinrichtung 10 kann grundsätzlich verschieden ausgebildet bzw. an verschiedenen Stellen angeordnet sein. Sie kann aus mehreren voneinander räumlich getrennten Steuerungsbausteinen bestehen, die miteinander kommunizieren. Beispielsweise kann ein zentraler Server vorgesehen sein, der mit einem Jobrechner auf dem Schlepper 5 kommuniziert. Es kann jedoch auch die gesamte Steuereinrichtung 10 auf dem Schlepper 5 angeordnet sein. Auch auf der Landmaschine können Steuerungsbausteine, aber auch Teile der Erfassungseinrichtung 6 angeordnet sein, beispielsweise in Form einer zusätzlichen Kamera, die den sich nähernden Schlepper 5 erfasst.

Vorteilhafterweise umfasst die Steuereinrichtung 10 weiterhin eine Positionsbestimmungseinrichtung 20, beispielsweise in Form eines an sich bekannten GPS-Systems, die die Position des Schleppers 5 insbesondere beim Abspannen einer Landmaschine bestimmt, die dann als Abstellposition des Geräts in dem Speicher 15 abgelegt wird, und zwar vorteilhafterweise zusammen mit dem aus den Kennzeichnungssymbolen 9 bestimmten Geräteidentifikationssignal. Soll die entsprechende Landmaschine erneut angespannt werden, kann durch Abrufen der Geräteidentifikation ein entsprechendes Positionssignal bereitgestellt werden, das die Abstellposition des Geräts angibt.

## Patentansprüche

1. Vorrichtung zur Steuerung des Anspannens einer Landmaschine (1), wie Pflug, Zetter, Ladewagen und dergleichen, an ein Arbeitsfahrzeug (5), mit einer Erfassungseinrichtung (6) zur Erfassung der Lage einer landmaschinenseitigen Anspannschnittstelle (3) relativ zu einer fahrzeugseitigen Anspannschnittstelle (4), sowie einer Steuereinrichtung (10) zur Bestimmung von Bewegungssteuersignalen in Abhängigkeit der erfassten relativen Lage, wobei die Steuereinrichtung (10) eine Lenksignaleinrichtung (11) zur Bereitstellung eines Lenksignals für die Lenkung der Räder des Arbeitsfahrzeugs (5) bei dessen Annäherung an die Landmaschine in Abhängigkeit der erfassten relativen Lage aufweist, **dadurch gekennzeichnet, dass** die Steuereinrichtung (10) eine Geräteidentifikationseinrichtung (18) zur automatischen Identifikation einer anzuspannenden Landmaschine (1) und Bereitstellung eines Geräteidentifikationssignals aufweist.

2. Vorrichtung nach dem vorhergehenden Anspruch, wobei die Steuereinrichtung (10) eine Anzeigevorrichtung (12) zur vorzugsweise visuellen und/oder akustischen Anzeige eines vorzunehmenden Lenkradeinschlags, einschließlich dessen Richtung und/oder dessen Betrag, in Abhängigkeit des Lenksignals aufweist.

3. Vorrichtung nach einem der vorhergehenden Ansprüche, wobei die Steuereinrichtung (10) eine Lenkeinrichtung (13) zur automatischen Steuerung des Lenkradeinschlags des Arbeitsfahrzeugs (5) in Abhängigkeit des Lenksignals aufweist.

4. Vorrichtung nach einem der vorhergehenden Ansprüche, wobei die Erfassungsvorrichtung (6) eine Bilderfassungseinheit (7) zur Erfassung eines Bilds der anzuspannenden Landmaschine und/oder des Arbeitsfahrzeugs (5), einen Bildspeicher zur Speicherung eines beim Abspannen der Landmaschine (1) erfassten Bilds sowie eine Bildauswerteeinrichtung zur Ermittlung der relativen Lage der Landmaschine (1) zum Arbeitsfahrzeug (5) anhand eines Bildvergleichs des gespeicherten Bilds mit einem aktuellen Bild aufweist.

5. Vorrichtung nach einem der vorhergehenden Ansprüche, wobei die Steuereinrichtung (10) eine Fahrpfadbestimmungseinrichtung (21), die aus der beim An- oder Abspannen sukzessive erfassten relativen Lage einen Fahrpfad (17) für das Arbeitsfahrzeug (5) relativ zur Landmaschine (1) bestimmt, sowie einen Fahrpfadspeicher (15) zur Speicherung des bestimmten Fahrpfades (17) besitzt, wobei die Lenksignaleinrichtung (11) das Lenksignal in Abhängigkeit des gespeicherten Fahrpfads (17) bestimmt.

6. Vorrichtung nach dem vorhergehenden Anspruch, wobei in dem Fahrpfadspeicher zu bestimmten Fahrpfadpunkten zugehörige Referenzbilder und/oder zugehörige Lenksignale abgespeichert sind.

7. Vorrichtung nach dem vorhergehenden Anspruch, wobei die Geräteidentifikationseinrichtung dazu vorgesehen ist, mittels der Erfassungseinrichtung (6) erfasste, auf der jeweiligen Landmaschine (1) angebrachte Kennzeichnungssymbole (9) und/oder deren Anordnung zu erkennen.

8. Vorrichtung nach einem der beiden vorhergehenden Ansprüche, wobei die Steuereinrichtung (10) in Abhängigkeit des Geräteidentifikationssignals Betriebsparameter und/oder eine Steuerfunktion des Schleppers (5) einstellt und/oder auswählt.

9. Vorrichtung nach einem der vorhergehenden Ansprüche, wobei die Steuereinrichtung (10) eine Anspannschnittstellen-Einstellvorrichtung (22) zur Einstellung der Konfiguration und/oder der Lage der fahrzeugseitigen Anspannschnittstelle (4) relativ zum Arbeitsfahrzeug (5) in Abhängigkeit eines zuvor bestimmten, jeweiligen Geräteidentifikationssignals und/oder in Abhängigkeit der bestimmten relativen Lage aufweist.

10. Vorrichtung nach dem vorhergehenden Anspruch, wobei die Anspannschnittstellen-Einstellvorrichtung (22) Aktoren (19) ansteuert, die zwischen der Anspannschnittstelle (4) und dem Arbeitsfahrzeug (5) vorgesehen sind.

11. Vorrichtung nach einem der vorhergehenden Ansprüche, wobei die Steuereinrichtung (10) eine Positionsbestimmungseinrichtung (20) zur Bereitstellung eines Positionssignals aufweist, das beim Abspannen einer Landmaschine (1) in einem Positionsspeicher (15) zusammen mit einem zuvor bestimmten Geräteidentifikationssignals speicherbar ist.

12. Verfahren zur Steuerung des Anspannens einer Landmaschine, wie Pflug, Zetter, Ladewagen und dergleichen, an ein Arbeitsfahrzeug (5), bei dem mittels einer Bilderfassungseinheit (7) die Lage einer landmaschinenseitigen Anspannschnittstelle (3) relativ zu einer fahrzeugseitigen Anspannschnittstelle (4) erfasst wird und von einer Steuereinrichtung Bewegungssteuersignale in Abhängigkeit der erfassten Lage bestimmt und in Abhängigkeit der jeweils erfassten relativen Lage Lenksignale für den Lenkradeinschlag zur Lenkung der Räder des Arbeitsfahrzeugs bei dessen Annäherung an die Landmaschine bestimmt und bereitgestellt werden, **dadurch gekennzeichnet, dass** von einer Geräteidentifikationseinrichtung (18) eine jeweils anzuspannende Landmaschine automatisch identifiziert und ein Geräteidentifikationssignal bereitgestellt wird.

## Claims

1. An apparatus for the control of the hitching of an agricultural machine (1), such as a plough, a tedder, a load wagon and the like, to a utility vehicle (5) comprising a detection device (6) for the detection of the position of a hitch interface (3) at the agricultural machine side relative to a hitch interface (4) at the vehicle side as well as a control device (10) for the determination of motion control signals in dependence on the detected relative position, with the control device (10) having a steering signal device (11) for the provision of a steering signal for the steering of the wheels of the utility vehicle (5) on its approach to the agricultural machine in dependence on the detected relative position, **characterised in that** the control device (10) has an equipment identification device (18) for the automatic identification of an agricultural machine (1) to be hitched and for the provision of an equipment identification signal.

2. An apparatus in accordance with the preceding claim, wherein the control device (10) has a display apparatus (12) for the preferably visual and/or acoustic display of a steering wheel movement to be made, in particular its direction and/or its magnitude, in dependence on the steering signal.

3. An apparatus in accordance with any one of the preceding claims, wherein the control device (10) has a steering device (13) for the automatic control of the steering wheel movement of the utility vehicle (5) in dependence on the steering signal.

4. An apparatus in accordance with any one of the preceding claims, wherein the detection apparatus (6) has an image detection unit (7) for the detection of an image of the agricultural machine to be hitched and/or of the utility vehicle (5), an image store for the storage of an image detected on the unhitching of the agricultural machine (1) as well as an image evaluation device for the determination of the relative position of the agricultural machine (1) to the utility vehicle (5) by means of an image comparison of the stored image with a then current image.

5. An apparatus in accordance with any one of the preceding claims, wherein the control device (10) has a driving path determination device (21) which determines a driving path (17) for the utility vehicle (5) relative to the agricultural machine (1) from the relative position successively detected on the hitching or unhitching as well as a driving path store (15) for the storage of the determined driving path (17), with the steering signal device (11) determining the steering signal in dependence on the stored driving path (17).

6. An apparatus in accordance with any one of the preceding claims, wherein reference images associated with specific driving path points and/or steering signals associated with specific driving path points are stored in the driving path store.

7. An apparatus in accordance with any one of the preceding claims, wherein the equipment identification device is provided to recognise marking symbols (9) attached to the respective agricultural machine (1) and/or their arrangement detected by means of the detection device (6).

8. A device in accordance with either of the two preceding claims, wherein the control device (10) sets and/or selects operating parameters and/or a control function of the tractor (5) in dependence on the equipment identification signal.

9. An apparatus in accordance with any one of the preceding claims, wherein the control device (10) has a hitching interface setting apparatus (22) for the setting of the configuration and/or of the position of the hitching interface (4) on the vehicle side relative to the utility vehicle (5) in dependence on a previously determined respective equipment identification signal and/or in dependence on the determined relative position.

10. A device in accordance with the preceding claim, wherein the hitching interface setting apparatus (22) controls actuators (19) which are provided between the hitching interface (4) and the utility vehicle (5).

11. An apparatus in accordance with any one of the preceding claims, wherein the control device (10) has a position determining device (20) for the provision of a position signal which can be stored in a position store (15), preferably together with a previously determined equipment identification signal, on the unhitching of an agricultural machine (1).

12. A method for the control of the hitching of an agricultural machine, such as a plough, a tedder, a loading wagon and the like, to a utility vehicle (5), wherein the position of a hitching interface (3) at the agricultural machine side relative to a hitching interface (4) at the utility vehicle side is detected by means of an image detection unit (7) and motion control signals are determined by a control device in dependence on the detected position and steering signals for the steering wheel movement for the steering of the wheels of the utility vehicle on its approach to the agricultural machine are determined and provided in dependence on the respectively detected relative position, **characterised in that** a respective agricultural machine to be hitched is automatically identified and an equipment identification signal is provided by an equipment identification device (18).

## Revendications

1. Dispositif pour la commande de l'attache d'une machine agricole (1), comme d'une charrue, d'un épandeur-faneur combiné, d'un chariot chargeur et analogue, à un véhicule de travail (5), avec une installation de détection (6) pour détecter la position d'une interface d'attache (3) côté machine agricole relativement à une interface d'attache (4) côté véhicule, et une installation de commande (10) pour déterminer des signaux de commande de déplacement en fonction de la position relative détectée, où l'installation de commande (10) présente une installation de signaux de guidage (11) pour la mise à disposition d'un signal de guidage pour le guidage des roues du véhicule de travail (5) lors de son approche à la machine agricole en fonction de la position relative détectée, **caractérisé en ce que** l'installation de commande (10) présente une installation d'identification d'appareil (18) pour l'identification automatique d'une machine agricole (1) à atteler et la mise à disposition d'un signal d'identification d'appareil.

2. Dispositif selon la revendication précédente, où l'installation de commande (10) présente un dispositif d'affichage (12) pour l'affichage de préférence visuel et/ou acoustique d'un braquage de volant à effectuer, y compris sa direction et/ou sa quantité, en fonction du signal de guidage.

3. Dispositif selon l'une des revendications précédentes, où l'installation de commande (10) présente une installation de guidage (13) pour la commande automatique du braquage de volant du véhicule de travail (5) en fonction du signal de guidage.

4. Dispositif selon l'une des revendications précédentes, où le dispositif de détection (6) présente une unité de détection d'image (7) pour détecter une image de la machine agricole à atteler et/ou du véhicule de travail (5), un dispositif de stockage d'images pour stocker une image prise lors du détachement de la machine agricole (1) ainsi qu'une installation d'évaluation d'image pour déterminer la position relative de la machine agricole (1) au véhicule de travail (5) à l'aide d'une comparaison de l'image stockée avec une image actuelle.

5. Dispositif selon l'une des revendications précédentes, où l'installation de commande (10) présente une installation de détermination de chemin de roulement (21), qui détermine à partir de la position relative détectée successivement lors de l'attelage ou du détachement un chemin de roulement (17) pour le véhicule de travail (5) relativement à la machine agricole (1), et possède un dispositif de stockage de chemin de roulement (15) pour le stockage du chemin de roulement déterminé (17), où l'installation de signaux de guidage (11) détermine le signal de guidage en fonction du chemin de roulement stocké (17).

6. Dispositif selon la revendication précédente, où sont stockées dans le dispositif de stockage de chemin de roulement des images de référence associées et/ou des signaux de guidage associés à des points de chemin de guidage déterminés.

7. Dispositif selon la revendication précédente, où l'installation d'identification d'appareil est prévue pour reconnaître, au moyen de l'installation de détection (6), des symboles de caractérisation détectés (9), indiqués sur la machine agricole respective (1) et/ou leur agencement.

8. Dispositif selon l'une des deux revendications précédentes, où l'installation de commande (10) règle et/ou sélectionne en fonction du signal d'identification d'appareil des paramètres de fonctionnement et/ou une fonction de commande du tracteur (5).

9. Dispositif selon l'une des revendications précédentes, où l'installation de commande (10) présente un dispositif de réglage d'interface d'attelage (22) pour le réglage de la configuration et/ou de la position de l'interface d'attelage côté véhicule (4) relativement au véhicule de travail (5) en fonction d'un signal d'identification d'appareil respectif, défini préalablement, et/ou en fonction de la position relative déterminée.

10. Dispositif selon la revendication précédente, où le dispositif de réglage d'interface d'attelage (22) commande des acteurs (19) qui sont prévus entre l'interface d'attelage (4) et le véhicule de travail (5).

11. Dispositif selon l'une des revendications précédentes, où l'installation de commande (10) présente une installation de détermination de position (20) pour la mise à disposition d'un signal de position qui, lors du détachement d'une machine agricole (1), peut être stocké dans un dispositif de stockage de position (15) ensemble avec un signal d'identification d'appareil déterminé préalablement.

12. Procédé de commande de l'attelage d'une machine agricole, comme une charrue, épandeur-faneur combiné, chariot chargeur et analogue, à un véhicule de travail (5), dans lequel, au moyen d'une unité de détection d'images (7), la position d'une interface d'attelage (3) côté machine agricole relativement à une interface d'attelage (4) côté véhicule est détectée, et par une installation de commande, des signaux de commande de déplacement sont déterminés en fonction de la position détectée, et en fonction de la position relative respectivement détectée, des signaux de guidage pour le braquage du volant pour la direction des roues du véhicule de travail, lors de son approche à la machine agricole, sont définis et mis à disposition, **caractérisé en ce que** par une installation d'identification d'appareil (18), une machine agricole respectivement à atteler est identifiée automatiquement et un signal d'identification d'appareil est mis à disposition.
